**Europäisches Patentamt**

**European Patent Office**

**Office européen des brevets**

(19)

(11) Veröffentlichungsnummer : **0 051 788**
**B1**

(12)

# EUROPÄISCHE PATENTSCHRIFT

(45) Veröffentlichungstag der Patentschrift :
28.08.85

(21) Anmeldenummer : 81108918.4

(22) Anmeldetag : 26.10.81

(51) Int. Cl.⁴ : **C 08 K 5/00, C 08 K 5/09,**
**C 08 L 27/06**

(54) Stabilisatorkombination für Thermoplaste, insbesondere Polymerisate auf Basis von Vinylchlorid sowie Verfahren zur Warmverformung derartiger Polymerisate.

(30) Priorität : 06.11.80 DE 3041887

(43) Veröffentlichungstag der Anmeldung :
19.05.82 Patentblatt 82/20

(45) Bekanntmachung des Hinweises auf die Patenterteilung : 28.08.85 Patentblatt 85/35

(84) Benannte Vertragsstaaten :
AT BE CH DE FR GB IT LI NL

(56) Entgegenhaltungen :
CH-A- 449 251
GB-A- 1 179 325

(73) Patentinhaber : Henkel Kommanditgesellschaft auf
Aktien
Postfach 1100 Henkelstrasse 67
D-4000 Düsseldorf-Holthausen (DE)

(72) Erfinder : Erwied, Werner, Dr.
Senliser Strasse 22
D-4018 Langenfeld (DE)
Erfinder : Wegemund, Bernd, Dr.
Händelweg 3
D-5657 Haan (DE)

## Beschreibung

Gegenstand der vorliegenden Erfindung sind Verarbeitungshilfsmittel für die thermoplastische Verformung von Polymerisaten auf Basis von Vinylchlorid beziehungsweise im wesentlichen Vinylchlorid enthaltenden Mischpolymerisaten. Sie enthalten Wärmestabilisatoren aus der Gruppe der Metallseifen, Phenolate, zinnorganischen Verbindungen und dergleichen sowie andere übliche Hilfsmittel, die in dieser Kunststofftechnologie verwendet werden.

Bei der Verarbeitung von thermoplastischen Polymerisaten, beispielsweise zur Herstellung von Rohren, Flaschen, Profilen und dergleichen durch Extrudieren, Spritzgießen, Blasen und dergleichen kann bei den angewendeten höheren Temperaturen leicht ein Abbau des Kunststoffs eintreten. Dies führt zu unerwünschten Verfärbungen und zur Minderung der mechanischen Eigenschaften. Aus diesem Grunde setzt man bei der Warmverforming Stabilisatoren zu, die einem solchen Abbau entgegenwirken. Es handelt sich dabei beispielsweise um Bleisalze von organischen und/oder anorganischen Säuren, Barium-, Cadmium-, Calcium-, Zink- und andere Metallsalze von Fettsäuren oder auch um Organozinnverbindungen.

Derartigen auch als Primärstabilisatoren bezeichneten Verbindungen setzt man zur Verbesserung ihrer Wirksamkeit häufig noch sogenannte Costabilisatoren zu.

Die Schwermetallstabilisatoren zeigen in der Praxis eine durchaus befriedigende Wirkung ; gegen ihren Einsatz bestehen jedoch gewisse Bedenken, insbesondere solche toxikologischer Art. Aus diesem Grund versucht man schon seit langem, dei üblicherweise verwendeten Schwermetallstabilisatoren durch weniger bedenkliche Substanzen zu ersetzen. Diesbezüglich hat man anstelle der Schwermetallstabilisatoren Seifen der leichten Erdalkalimetalle verwendet, und zwar vorzugsweise Calciumseife, die gegebenenfalls durch Zusätze von Zinkseife, Iminoverbindungen und Epoxyverbindungen ergänzt wird.

Der stabilisierende Effekt des Calciumseifensystems ist gegenüber dem der Schwermetallverbindungen vergleichsweise gering. Infolgedessen ist die Anwendungsbreite solcher Stabilisatorsysteme bisher erheblich beschränkt.

Aufgabe der vorliegenden Erfindung war es, solche Kombinationen von Verarbeitungshilfsmitteln, das heißt von Wärmestabilisatoren zu finden, die gegenüber den bekannten Schwermetall-Stabilisatoren eine Verbesserung der Langzeitstabilität bei gleichzeitig guter Anfangsfarbe bewirken. Eine weitere Aufgabe besteht darin, solche Kombinationen zu finden, die die Einsparung der teuren und vielfach verwendeten Dialkylzinnverbindungen möglich machen.

Erfindungsgemäß wird diese Aufgabe gelöst durch eine Kombination von Wärmestabilisatoren aus der Gruppe der Metallseifen, Phenolate, zinnorganischen Verbindungen und dergleichen sowie übliche Gleitmittel und andere Hilfsmittel, welche dadurch gekennzeichnet ist, daß sie einen zusätzlichen Gehalt (bezogen auf 100 Gewichtsteile Polymerisat) an 0,05 bis 5 Gewichtsteilen von aliphatischen 4 bis 6 OH-Gruppen enthaltenden Hydroxylverbindungen, die wenigstens noch eine Carboxyl- und/oder Carbonylfunktion und/oder Doppelbindung aufweisen.

Nach einer bevorzugten Ausführungsform enthält die Stabilisatorkombination als aliphatische Hydroxylverbindungen Gluconsäure und/oder Glucuronsäure und/oder Ketogluconsäure und/oder Ascorbinsäure beziehungsweise deren Alkali- und/oder Erdalkalisalze.

Weiter kann es von Vorteil sein, auf 1 Gewichtsteil der aliphatischen Hydroxylverbindung noch 0,5 bis 5 Gewichtsteile Calciumsalz von Fettsäuren mit 8 bis 22 Kohlenstoffatomen sowie 0,2 bis 2 Gewichtsteile Zinksalz von Fettsäuren mit 8 bis 22 Kohlenstoffatomen zusätzlich in der Kombination einzusetzen. Unter Umständen kann es auch vorteilhaft sein, die fettsauren Salze ganz oder teilweise durch gegebenenfalls Alkylgruppen tragende Phenolate oder Naphthenate dieser Metalle zu ersetzen. Auch sogenannte überbasische Phenolate oder Naphthenate sind gegebenenfalls brauchbare Zusätze.

In vielen Fällen kann es günstig sein, den Stabilisatorkombinationen auf 1 Gewichtsteil der aliphatischen Hydroxylverbindung noch 0,2 bis 5 Gewichtsteile eines synthetischen, kristallinen, 13 bis 25 Gewichtsprozent gebundenes Wasser enthaltenden, feinteiligen Natriumalumosilikats, das — bezogen auf die wasserfreie Form — die Zusammensetzung 0,7 bis 1,1 $Na_2O \cdot Al_2O_3 \cdot$ 1,3 bis 2,4 $SiO_2$ hat, zuzusetzen. Derartige Zeolithe sind als Hilfsmittel bei der Verarbeitung von Thermoplasten bekannt.

Ferner sind als Hilfsstoffe geeignet Partialester mehrwertiger Alkohole wie des Glycerins, Trimethylolpropans oder insbesondere des Pentaerythrits beziehungsweise Dipentaerythrits. Diese werden in bekannter Weise durch Veresterung mit Fettsäuren einer Kettenlänge von 8 bis 22 Kohlenstoffatomen hergestellt.

Als geeignete Fettsäuren seien beispielsweise genannt die Laurin-, Myristin-, Palmitin-, Stearin- oder Behensäure. Es können auch synthetische Fettsäuren der genannten Kettenlänge, wie Montansäuren oder auch ungesättigte Säuren, wie Ölsäure, Linolensäure oder auch substituierte, zum Beispiel 12-Hydroxystearinsäure eingesetzt werden. Bei Einsatz von Pentaerythrit sollte das Verhältnis von Pentaerythrit zu Fettsäure im Bereich von 1 : 1 bis 1 : 2 liegen. Die Partialester sollen eine OH-Zahl zwischen 140 und 580, insbesondere 170 und 450 haben. Die Säurezahl des Reaktionsproduktes soll unter 15, insbesondere unter 8 liegen. Die Menge des Esters sollte, bezogen auf 1 Gewichtsteil aliphatischer Hydroxylverbindung, 0,2 bis 2,0 Gewichtsteile betragen.

Auch kann es vorteilhaft sein, auf 1 Gewichtsteil der aliphatischen Hydroxylverbindung noch 0,1 bis

**0 051 788**

3,0 Gewichtsteile eines Thioglykolsäureesters eines Alkohols mit 1 bis 6 Hydroxylgruppen und 3 bis 36 Kohlenstoffatomen zusätzlich zu verwenden. Hier kommen relativ wenig flüchtige Ester von beispielsweise Glycerin, Trimethylpropan, isomere Octanole, Decanol, Guerbertalkohol von Octanolen oder auch technischer dimerisierter Fettalkohol in Betracht. Diese Ester können gegebenenfalls auch freie Hydroxylgruppen aufweisen, wie auch der zusätzliche Einsatz freier mehrwertiger Alkohole möglich ist.

Wegen der besonders günstigen Wirkung von organischen Zinnverbindungen können diese auch in geringerer Menge zusätzlich eingesetzt werden. Hier kommen, bezogen auf 1 Gewichtsteil aliphatischer Hydroxylverbindung, etwa 0,05 bis 1,0 Gewichtsteile Organozinnverbindung in Frage. Gegebenenfalls kann auch ein Zusatz von Phenolaten aus der Gruppe der Erdalkaliphenolate von Vorteil sein. Üblicherweise verwendet man Bariumnonylphenolat.

Schließlich kann gegebenenfalls eine günstige Wirkung, erzielt werden, wenn man den Stabilisatorkombinationen, bezogen auf 1 Gewichtsteil der aliphatischen Hydroxylverbindung, noch 0,02 bis 0,5 Gewichtsteile 1,3-Dicarbonylverbindung zusetzt. Diese Verbindungen und ihre Verwendung als Stabilisator für PVC sind bekannt. Im allgemeinen kommen solche 1,3-Diketone in Frage, die noch wenigstens zwei Alkyl-, Aryl- oder Aralkylgruppen wie Dodecyl, Hexadecyl, Octadecyl, Phenyl oder benzyl im Molekül enthalten. Demnach sind derartige Vertreter Palmitoyl-stearyl-methan oder Stearoyl-benzoyl-methan.

Als weitere Hilfsstoffe kommen in Frage wachsartige Kohlenwasserstoffe wie Paraffin mit einem Erstarrungspunkt von 50 bis 90 °C und/oder niedermolekulare Polyethylensorten, deren Erweichungspunkt unterhalb 140 °C liegen soll. Zweckmäßig werden diese wachsartigen Kohlenwasserstoffe mit freien Fettsäuren kombiniert, wobei unter den Fettsäuren die mit 12 bis 22 Kohlenstoffatomen, die bei der Aufarbeitung von natürlichen Fetten anfallen, bevorzugt sind. Günstige Ergebnisse werden erhalten bei Verwendung von Palmitin- und Stearinsäure. Auch Fettalkohole können mitverwendet werden.

Schließlich kommen als weitere Additive bestimmte Polymerisate in Frage, beispielsweise auf Basis von Methacrylsäuremethylester, Methacrylsäuremethylester/Acrylsäurebutylester, Acrylsäureethylester, Methacrylsäuremethylester/Acrylsäure- beziehungsweise Methacrylsäurebutylester/Styrol. Derartige Polymerisate oder Copolymerisate werden als flow promoter bezeichnet. Polymerisate aus Acrylsäurebutylester wirken auch als Trennmittel bei der Verarbeitung von Polyvinylchlorid und anderen Mischpolymerisaten auf Basis von Vinylchlorid.

Wenn es notwendig ist, kann man bei der thermoplastischen Verarbeitung von Vinylchloridpolymerisaten auch Antioxidationsmittel zusetzen. In Frage kommen hier beispielsweise Diphenylolpropan oder aber 2,5-Bis-(1,1-dimethylpropyl)-hydrochinon, 2,6-Di-tert · butyl-4-methylphenol, Octadecyl-(3,5-di-tert · butyl-4-hydroxyphenyl)-propionat, 1,1,3-Tris-(5-tert · butyl-4-hydroxy-2-methylphenyl)-butan, Dilaurylthiodipropionat.

Die erfindungsgemäßen Mischungen entfalten eine gute stabilisierende Wirkung gegenüber Polyvinylchlorid oder Mischpolymerisaten des Vinylchlorids mit einem überwiegenden Gehalt an Vinylchlorid. Die Polymerisate beziehungsweise Mischpolymerisate können nach bekannten Verfahren, wie der Suspensions-, Emulsions- oder Massepolymerisation hergestellt sein. Ihr K-Wert kann zwischen etwa 35 und 80 liegen.

Es ist im allgemeinen hinreichend, zur Entfaltung einer guten Wirkung 0,2 bis 5 Gewichtsprozent des Gemisches, bezogen auf Polyvinylchlorid beziehungsweise die genannten Mischpolymerisate, zuzusetzen.

Die erfindungsgemäßen Kombinationen können als Stabilisatoren bei der Herstellung von Rohren, Platten, Fellen, Folien und sonstigen Halbzeugen aus PVC sowie anderen Polymerisaten auf Basis von Vinylchlorid unter Formgebung in der Wärme.

Bei der Herstellung von Rohren, Profilen und Folien unter der Verwendung einer beschriebenen Stabilisatorkombination kann man auf 100 Gewichtsteile Polymerisat auf Basis von Vinylchlorid zweckmäßig zusätzlich 0,5 bis 1 Gewichtsteile Paraffin vom Schmelzpunkt 50 bis 90 °C und/oder freie Fettsäure mit 8 bis 22 Kohlenstoffatomen verwenden. Bei der Herstellung von Hohlkörpern und Folien ist es oft zweckmäßig, auf 100 Gewichtsteile thermoplastischen Polymerisats beziehungsweise Polyvinylchlorids zusätzlich 0,5 bis 5 Gewichtsteile epoxidiertes Sojaöl und 0,1 bis 0,8 Gewichtsteile höhermolekulares Esterwachs zuzusetzen.

Beispiel 1

Es wurde eine Mischung hergestellt aus 100 Gewichtsteilen Suspensions-PVC (K-Wert 70) und 3,4 Gewichtsteilen der nachstehenden Mischung :

10 g Calciumstearat
5 g Zinkstearat
2 g Stearinsäure
2 g Paraffin
5 g Pentaerythritester der Stearinsäure (Mol-Verhältnis 1 : 1,5)
10 g Natriumsalz der Ascorbinsäure

Die zu prüfenden Walzfelle von 0,5 mm Dicke wurden auf einem Laborwalzwerk 450 × 220 mm

3

während 5 Minuten bei einer Temperatur von 170 °C und 30 Upm hergestellt. Die eigentliche Prüfung der statischen Thermostabilität erfolgte in einem Trockenschrank (Heraeus) mit rotierenden Horden bei 180 °C.

Nach 60 min Prüfdauer wurde das Stabilitätsende erreicht.

Vergleichsversuch :

Wurde das Natriumsalz der Ascorbinsäure weggelassen, trat bei sonst gleicher Verfahrensweise das Stabilitätsende bereits nach 40 min auf.

Beispiel 2

Es wurde verfahren wie im Beispiel 1 beschrieben, jedoch mit dem Unterschied, daß anstelle von Ascorbinat Gluconsäure beziehungsweise Gluconate eingesetzt wurden. In der nachstehenden Tabelle 1 ist in Abhängigkeit vom Stabilisator die Zeit in Minuten bis zum Stabilitätsende wiedergegeben.

Tabelle 1

| Stabilisator | Minuten (Stabilitätsende) |
|---|---|
| Gluconsäure | 70-110 |
| Na-Salz der Gluconsäure | 100-120 |
| Ca-Salz der Gluconsäure | 100 |

Beispiel 3

Es wurde verfahren wie im Beispiel 2 beschrieben, jedoch mit dem Unterschied, daß antelle von Natrium-gluconat allein jetzt davon 50 % durch Thioglykolsäure-2-ethylhexylester beziehungsweise Benzoyl-stearoylmethan ersetzt wurden. Durch diese Zusätze wird die Anfangsfarbe verbessert.

In der nachfolgenden Tabelle 2 sind die — wie in den vorstehenden Beispielen erläutert — die Resultate wiedergegeben.

Tabelle 2

| Stabilisatorzusatz (bezogen auf 100 Gewichtsteile PVC) | | Minuten | |
|---|---|---|---|
| | | erste Verfärbungen | Stabilitäts-ende |
| 1 | Gewichtsteil Na-Salz der Gluconsäure | 5 | 100 - 120 |
| 0,5 | Gewichtsteile Na-Salz der Gluconsäure | 20 | 80 |
| 0,5 | Gewichtsteile Thioglykolsäure-2-ethyl-hexylester | | |
| 0,5 | Gewichtsteile Na-Salz der Gluconsäure | 20 | 80 |
| 0,5 | Gewichtsteile Benzoyl-stearoyl-methan | | |
| 0,5 | Gewichtsteile Na-Salz der Gluconsäure | | |
| 0,5 | Gewichtsteile Benzoyl-stearoyl-methan (0,5 Teile pro 100 Teile PVC) | 20 | 100 |
| 1,0 | Gewichtsteil Na-Al-Silikat 19 % $H_2O$ (Zeolith-Typ Na A) | | |

4

**Patentansprüche**

1. Stabilisatorkombination für Polymerisate auf Basis von Vinylchlorid, enthaltend Wärmestabilisatoren aus der Gruppe der Metallseifen, Phenolate, zinnorganischen Verbindungen und dergleichen sowie übliche Gleitmittel und andere Hilfsmittel, gekennzeichnet durch einen zusätzlichen Gehalt (bezogen auf 100 Gewichtsteile Polymerisat) an 0,02 bis 5 Gewichtsteilen von aliphatischen 4 bis 6 OH-Gruppen enthaltenden Hydroxylverbindungen, die wenigstens noch eine Carboxyl- und/oder Carbonylfunktion und/oder Doppelbindung aufweisen.

2. Stabilisatorkombination nach Anspruch 1, für Polymerisate auf Basis von Vinylchlorid, dadurch gekennzeichnet, daß als aliphatische Hydroxylverbindungen Gluconsäure und/oder Glucuronsäure und/oder Ketogluconsäure und/oder Ascorbinsäure beziehungsweise deren Alkali- und/oder Erdalkalisalze vorhanden sind.

3. Stabilisatorkombination nach Ansprüchen 1 und 2, dadurch gekennzeichnet, daß auf 1 Gewichtsteil der aliphatischen Hydroxylverbindung noch 0,5 bis 5 Gewichtsteile Calciumsalz von Fettsäuren mit 8 bis 22 Kohlenstoffatomen sowie 0,2 bis Gewichtsteile Zinksalz von Fettsäure mit 8 bis 22 Kohlenstoffatomen vorhanden sind.

4. Stabilisatorkombination nach Ansprüchen 1 bis 3, dadurch gekennzeichnet, daß auf 1 Gewichtsteil der aliphatischen Hydroxylverbindung noch 0,2 bis 5 Gewichtsteile eines synthetischen, kristallinen, 13 bis 25 Gewichtsprozent gebundenes Wasser enthaltenden, feinteiligen Natriumalumosilikats, das — bezogen auf die wasserfreie Form — die Zusammensetzung 0,7 bis 1,1 $Na_2O \cdot Al_2O_3 \cdot 1,3$ bis 2,4 $SiO_2$ hat, vorhanden sind.

5. Stabilisatorkombination nach Ansprüchen 1 bis 4, dadurch gekennzeichnet, daß auf 1 Gewichtsteil der aliphatischen Hydroxylverbindung noch 0,2 bis 2,0 Gewichtsteile eines Partialesters mehrwertiger Alkohole mit Fettsäuren mit 8 bis 22 Kohlenstoffatomen, die eine OH-Zahl zwischen 140 und 580 haben, vorhanden sind.

6. Stabilisatorkombination nach Ansprüchen 1 bis 5, dadurch gekennzeichnet, daß auf 1 Gewichtsteil aliphatischer Hydroxylverbindung noch 0,1 bis 3,0 Gewichtsteile eines Thioglykolsäureesters eines Alkohols mit 1 bis 6 Hydroxylgruppen und 3 bis 36 Kohlenstoffatomen vorhanden sind.

7. Stabilisatorkombination nach Ansprüchen 1 bis 6, dadurch gekennzeichnet, daß auf 1 Gewichtsteil der aliphatischen Hydroxylverbindung zusätzlich 0,05 bis 1,0 Gewichtsteile organische Zinnverbindung vorhanden sind.

8. Stabilisatorkombination nach Ansprüchen 1 bis 7, dadurch gekennzeichnet, daß auf 1 Gewichtsteil der aliphatischen Hydroxylverbindung zusätzlich 0,02 bis 0,5 Gewichtsteile einer 1,3-Dicarbonylverbindung vorhanden sind.

9. Verfahren für die Herstellung von Rohren, Profilen und Folien unter Formgebung in der Wärme unter der Verwendung einer Stabilisatorkombination nach Ansprüchen 1 bis 8, dadurch gekennzeichnet, daß man auf 100 Gewichtsteile Polymerisat auf Basis von Vinylchlorid zusätzlich 0,5 bis 1 Gewichtsteile Paraffin vom Schmelzpunkt 50 bis 90 °C und/oder freie Fettsäure mit 8 bis 22 Kohlenstoffatomen zusetzt.

10. Verfahren unter Verwendung einer Stabilisatorkombination nach Ansprüchen 1 bis 8 für die Herstellung von Hohlkörpen und Folien unter Formgebung in der Wärme, dadurch gekennzeichnet, daß man auf 100 Gewichtsteile thermoplastiches Polyvinylchlorid zusätzlich 0,5 bis 5 Gewichtsteile epoxidiertes Sojaöl und 0,1 bis 0,8 Gewichtsteile höhermolekulares Esterwachs zusetzt.

**Claims**

1. A stabilizer combination for polymers based on vinyl chloride containing heat stabilizers from the group comprising metal soaps, phenolates, organotin compounds and the like and standard lubricants and other auxiliaries, characterized by an additional content (based on 100 parts by weight of polymer) of from 0.02 to 5 parts by weight of aliphatic hydroxyl compounds containing from 4 to 6 OH-groups and at least one carboxyl and/or carbonyl function and/or double bond.

2. A stabilizer combination as claimed in Claim 1 for polymers based on vinyl chloride, characterized in that gluconic acid and/or glucuronic acid and/or ketogluconic acid and/or ascorbic acid of alkali and/or alkaline-earth metal salts thereof are present as the aliphatic hydroxyl compounds.

3. A stabilizer combination as claimed in Claims 1 and 2, characterized in that from 0.5 to 5 parts by weight of the calcium salt of $C_8$-$C_{22}$ fatty acids and from 0.2 to 2 parts by weight of the zinc salt of $C_8$-$C_{22}$ fatty acids are additionally present to 1 part by weight of the aliphatic hydroxyl compound.

4. A stabilizer combination as claimed in Claims 1 to 3, characterized in that from 0.2 to 5 parts by weight of a synthetic, crystalline, finely particulate sodium alumosilicate containing from 13 to 25% by weight of bound water and having the composition (based on the anhydrous form) 0.7 to 1.1 $Na_2O \cdot Al_2O_3 \cdot 1 \cdot 3$ to 2.4 $SiO_2$ are also present to 1 part by weight of the aliphatic hydroxyl compound.

5. A stabilizer combination as claimed in Claims 1 to 4, characterized in that from 0.2 to 2.0 parts by weight of a partial ester of polyhydric alcohols with $C_8$-$C_{22}$ fatty acids having an OH-number of from 140 to 580 are also present to 1 part by weight of the aliphatic hydroxyl compound.

6. A stabilizer combination as claimed in Claims 1 to 5, characterized in that from 0.1 to 3.0 parts by weight of a thioglycolic acid ester of an alcohol containing from 1 to 6 hydroxyl groups and from 3 to 36 carbon atoms are also present to 1 part by weight of the aliphatic hydroxyl compound.

7. A stabilizer combination as claimed in Claims 1 to 6, characterized in that from 0.05 to 1.0 part by weight of organotin compound is additionally present to 1 part by weight of the aliphatic hydroxyl compound.

8. A stabilizer combination as claimed in Claims 1 to 7, characterized in that from 0.02 to 0.5 part by weight of a 1,3-dicarbonyl compound is additionally present to 1 part by weight of the aliphatic hydroxyl compound.

9. A process for the production of tubes, profiles and films by hot-forming using the stabilizer combination claimed in Claims 1 to 8, characterized in that from 0.5 to 1 part by weight of paraffin melting at 50 to 90 °C and/or a free $C_8$-$C_{22}$ fatty acid is additionally added per 100 parts by weight of polymer based on vinyl chloride.

10. A process for the production of hollow bodies and films by hot-forming using the stabilizer combination claimed in Claims 1 to 8, characterized in that from 0.5 to 5 parts by weight of epoxidized soya oil and from 0.1 to 0.8 part by weight of a relatively high molecular weight ester wax are additionally added per 100 parts by weight of thermoplastic polyvinyl chloride.

**Revendications**

1. Combinaison stabilisante pour polymères à base de chlorure de vinyle, contenant des stabilisants à la chaleur du groupe des savons métalliques, des phénolates, des composés organostanniques et similaires, de même que des agents lubrifiants usuels et autres auxiliaires, caractérisée par une teneur supplémentaire (par 100 parties en poids de polymère) de 0,02 à 5 parties en poids de composés hydroxylés aliphatiques contenant 4 à 6 groupes OH, lesquels présentent en outre au moins une fonction carboxyle et/ou carbonyle et/ou une double liaison.

2. Combinaison stabilisante selon la revendication 1 pour polymères à base de chlorure de vinyle, caractérisée en ce qu'en tant que composés hydroxylés aliphatiques sont présents de l'acide gluconique et/ou de l'acide glucuronique et/ou de l'acide cétogluconique et/ou de l'acide ascorbique ou leurs sels alcalins et/ou alcalino-terreux.

3. Combinaison stabilisante selon les revendications 1 et 2, caractérisée en ce que pour 1 partie en poids du composé hydroxylé aliphatique sont présentes en plus 0,5 à 5 parties en poids de sel de calcium d'acides gras ayant 8 à 22 atomes de carbone de même que 0,2 à 2 parties en poids de sel de zinc d'acide gras ayant 8 à 22 atomes de carbone.

4. Combinaison stabilisante selon les revendications 1 à 3, caractérisée en ce que pour 1 partie en poids du composé hydroxylé aliphatique sont en outre présentes 0,2 à 5 parties en poids d'un alumosilicate de sodium synthétique cristallin, finement divisé, contenant 13 à 25 % en poids d'eau fixée, lequel, rapporté à la forme anhydre, a la composition 0,7 à 1,1 $Na_2O \cdot Al_2O_3 \cdot 1,3$ à 2,4 $SiO_2$.

5. Combinaison stabilisante selon les revendications 1 à 4, caractérisée en ce que pour 1 partie en poids du composé hydroxylé aliphatique sont en plus présentes 0,2 à 2,0 parties en poids d'un ester partiel d'alcools polyvalents avec des acides gras ayant 8 à 22 atomes de carbone, d'un indice OH compris entre 140 et 580.

6. Combinaison stabilisante selon les revendications 1 à 5, caractérisée en ce que pour 1 partie en poids du composé hydroxylé aliphatique sont en plus présentes 0,1 à 3,0 parties en poids d'un ester d'acide thioglycolique d'un alcool ayant 1 à 6 groupes hydroxyle et 3 à 36 atomes de carbone.

7. Combinaison stabilisante selon les revendications 1 à 6, caractérisée en ce que pour 1 partie en poids du composé hydroxylé aliphatique est en outre présente 0,05 à 1,0 partie en poids d'un composé organostannique.

8. Combinaison stabilisante selon les revendications 1 à 7, caractérisée en ce que pour 1 partie en poids du composé hydroxylé aliphatique est en plus présente 0,02 à 0,5 partie en poids d'un composé 1,3-dicarbonylé.

9. Procédé de fabrication de tubes, profilés et feuilles avec formage à chaud et avec utilisation d'une combinaison stabilisante selon les revendications 1 à 8, caractérisé en ce que pour 100 parties en poids de polymère à base de chlorure de vinyle on ajoute en plus 0,5 à 1 partie en poids de paraffine ayant un point de fusion de 50 à 90 °C et/ou d'un acide gras libre ayant 8 à 22 atomes de carbone.

10. Procédé avec utilisation d'une combinaison stabilisante selon les revendications 1 à 8 pour la fabrication de corps creux et de feuilles avec formage à chaud, caractérisé en ce que pour 100 parties en poids du chlorure de polyvinyle thermoplastique on ajoute en plus 0,5 à 5 parties en poids d'huile de soya époxydée et 0,1 à 0,8 partie en poids de cire ester à poids moléculaire élevé.